# EUROPÄISCHE PATENTSCHRIFT

(11) **EP 4 538 718 B1**
(45) Veröffentlichungstag und Bekanntmachung des Hinweises auf die Patenterteilung: **30.09.2026**
(21) Anmeldenummer: 23202723.5
(22) Anmeldetag: 10.10.2023
(51) Int. Cl.: G01P 21/02, G01P 3/48

(54) **ZUSTANDSÜBERWACHUNG FÜR DREHBARE ELEMENTE**
CONDITION MONITORING FOR ROTATABLE MEMBERS
SURVEILLANCE DE L'ÉTAT D'ÉLÉMENTS ROTATIFS

(43) Veröffentlichungstag der Anmeldung: 16.04.2025
(73) Patentinhaber: Siemens Aktiengesellschaft, 80333 München (DE)
(72) Erfinder: Bormann, Ulf, 90518 Altdorf (DE); Finkler, Roland, 91058 Erlangen (DE); Scheibner, Dirk, 90469 Nürnberg (DE); Schimmer, Jürgen, 90473 Nürnberg (DE)
(74) Vertreter: Siemens Patent Attorneys

(56) Entgegenhaltungen:
- EP-A1- 1 835 293
- DE-A1- 102006 041 056
- DE-A1- 102018 202 228
- JP-A- H09 196 944

## Beschreibung

Die Erfindung betrifft eine Drehzahlerfassungseinheit, insbesondere Drehgeber. Zudem betrifft die Erfindung eine technische Einheit, welche ein sich drehendes Element und eine Drehzahlerfassungseinheit aufweist. Außerdem betrifft die Erfindung ein System mit einer Drehzahlerfassungseinheit oder einer technischen Einheit, und eine separate Erfassungseinheit. Zudem betrifft die Erfindung ein Verfahren zur Überwachung eines Zustandes eines sich drehenden Elements, insbesondere einer elektrischen Maschine.

Drehgeber dienen zur Messung von Wegstrecken, Geschwindigkeiten oder Drehwinkeln eines mit dem Drehgeber verbundenen drehbaren Objekts. Die Drehgeber weisen dazu einen Sensor zur Erfassung einer Drehstellung oder Drehstellungsänderung auf. Derartige Drehgeber sind in der Lage, einen Drehwinkel mit sehr hoher Drehwinkelauflösung, wie z.B. mit einer Auflösung von 0,1°, zu erfassen.

Im industriellen Umfeld werden Drehgeber z.B. in Werkzeugmaschinen, in der Handhabungs- und Automatisierungstechnik und an Mess- und Prüfeinrichtungen eingesetzt.

Der Drehgeber kann z.B. ein Encoder sein, welcher die absolute Drehwinkelposition erfasst und welcher ein korrespondierendes kodiertes Signal ausgibt. Der Drehgeber kann auch ein Inkrementaldrehgeber sein, der z.B. zwei gegeneinander um 90° versetzte Signale ausgibt. Aus den beiden Drehgebersignalen können relative Drehwinkeländerungen ermittelt werden.

Weiterhin sind Inkrementaldrehgeber bekannt, welche zusätzlich bei einem vorbestimmten Drehwinkel ein Referenzsignal ausgeben. Durch Auswertung dieses Signals kann der absolute Drehwinkel abgeleitet werden.

Drehgeber können beispielsweise auf einem photoelektrischen oder magnetischen Prinzip basieren. Im ersteren Fall wird ein Lichtstrahl, der in der Regel durch eine LED erzeugt wird, durch eine mit Strichen oder Schlitzen versehene Abtastplatte auf einen photooptischen Sensor - in der Regel ein Phototransistor - geleitet. Rotiert die Abtastplatte, wird der Lichtstrahl zwischen LED und Phototransistor zyklisch moduliert. Aus dem modulierten Signal des Phototransistors lässt sich ein entsprechendes Drehgebersignal generieren.

Derartige Drehgeber können z.B. an einem Rotorwellenende einer elektrischen Maschine zur Erfassung der Drehstellungsänderung der Rotorwelle angebracht sein. Der Drehgeber kann alternativ über einen Zahnriemen mit der Rotorwelle verbunden sein. Die Drehgebersignale werden üblicherweise zur Überwachung und/oder zur Regelung der elektrischen Maschine benötigt. Die elektrische Maschine kann z.B. ein Elektromotor oder ein Generator sein. Sie kann eine Asynchron- oder Synchronmaschine sein.

"Condition Monitoring" wird insbesondere im industriellen Umfeld zur zustandsorientierten Instandhaltung von rotierenden Maschinen eingesetzt. Da Ausfälle der überwachten Maschinen sowohl zu sicherheitskritischen Zuständen als auch zu gravierende Kosten - nicht nur an der Maschine selbst, sondern vor allem auch an den Folgeprozessen - führen können, wird Condition Monitoring verwendet, um solche Ausfälle vorzubeugen.

Aufgrund der Daten, die durch Condition Monitoring gewonnen werden, kann der Zustand der überwachten Maschine analysiert und dementsprechend zustandsorientiert die Wartung, Reparatur oder Austausch der Maschine veranlasst werden.

Dadurch entsteht ein großes Potential zur Kosteneinsparung, da die Lebensdauer kritischer Maschinenelemente besser ausgenutzt werden kann und gleichzeitig nötige Instandsetzungsmaßnahmen in Abstimmung mit dem Produktionsplan terminiert werden können.

Zum Condition Monitoring rotierender Anlagen werden Vibrations- und andere Sensorsignale ausgewertet. Hierzu werden bestimmte Frequenzen im Frequenzspektrum der Sensorsignale analysiert. Die dabei zu betrachtenden Frequenzen hängen wesentlich von der Drehzahl der rotierenden Maschine ab. Insofern ist eine wesentliche Voraussetzung sowohl zur Berechnung des Frequenzspektrums als auch zur Analyse der zu betrachtenden Frequenzen, dass die Drehzahl über einen längeren Zeitraum konstant ist. Dies ist in der Praxis aber häufig nicht der Fall.

Eine Möglichkeit zur Umgehung dieser Problematik ist eine Ordnungsanalyse. Dies bedeutet, dass anstelle ausgewählter Frequenzen Vielfache der Drehzahl analysiert werden. Eine solche Ordnungsanalyse ist auch möglich, selbst wenn sich die Drehzahl während des Betrachtungszeitraumes ändert. Damit dies aber möglich ist, muss die Drehzahl innerhalb des Betrachtungszeitraumes durchgängig bekannt sein. Dadurch können die Sensorwerte anstatt auf die Zeit auf die Drehzahl bezogen werden.

Um eine Zustandsüberwachung an rotierenden Maschinen auch im dynamischen Betrieb durchzuführen, wurde bisher ein Condition Monitoring System mit zusätzlicher Drehzahlerfassung benötigt. Hierbei entstehen allerdings durch das System Kosten im vier- bis fünfstelligen Bereich, so dass sich eine solche Zustandsüberwachung nur für rotierende Maschinen im Highend Bereich lohnt.

Wenn die Regelung des Motors über einen Geber erfolgt, dann ist eine Drehzahlerkennung und die digitale Schnittstelle zur Datenübertragung bereits vorhanden.

Aus der DE 10 2006 041 056 A1 ist bekannt, dass die Geberschnittstelle zur Übertragung weiterer Sensordaten genutzt werden kann. Das wesentliche Problem ist allerdings, dass die Zuordnung der Sensordaten zur Drehzahl in einer sehr hohen Genauigkeit erfolgen muss, die bei einer parallelen Digitalisierung der Messwerte zur Geberlage ohne eine Synchronisation nicht erreicht werden kann.

Eine Möglichkeit wäre, einen Sensor zu verwenden, der mit der gleichen Rate Daten liefert, mit der der Geber betrieben wird. Allerdings werden herkömmliche Sensoren mit einem internen, relativ ungenauen Takt betrieben. Aus dem Grund ist es nicht möglich, einen Sensor mit gleicher Datenrate zum Gebertakt auszuwählen. Und selbst wenn der interne Takt des Sensors deutlich genauer wäre, so würden doch bestehende kleinere Diskrepanzen zwischen Gebertakt und Sensortakt zu großen Ungenauigkeiten bei der Zustandsüberwachung führen.

Typischerweise zeigt ein Sensor, dass ein neues Signal gewonnen wurde, indem ein Interruptsignal gesetzt wird. Insofern lässt sich durch Messen der Periode zwischen zwei oder mehreren Interrupts (z.B. über einen Capture Eingangs eines µControllers) die Datenrate des Sensors sehr leicht messen. An diese Datenrate könnte der Gebertakt angepasst werden, um eine synchrone Datenerfassung des Gebers und des Sensors zu erreichen. Allerdings werden die Gebersignale zur Regelung der rotierenden Maschine verwendet. Eine kontinuierliche Anpassung des Gebertaktes an die Datenrate des Sensors würde diese Regelung signifikant erschweren und daher keine gangbare Lösung darstellen.

Der Erfindung liegt die Aufgabe zugrunde, ein aufwandsarmes und dabei zuverlässiges Verfahren zum Überwachen einer Drehzahl eines drehbaren Elementes anzugeben.

Diese Aufgabe wird gelöst durch eine Drehzahlerfassungseinheit, insbesondere Drehgeber, nach Anspruch 1. Außerdem wird die Aufgabe gelöst durch eine technische Einheit nach Anspruch 7. Zudem wird die Aufgabe gelöst durch ein System nach Anspruch 8 und ein Verfahren zur Überwachung eines Zustandes eines sich drehenden Elements nach Anspruch 11.

Eine erfindungsgemäße Drehzahlerfassungseinheit umfasst einen ersten Sensor zur Erfassung einer von der Drehstellung eines drehbaren Elementes abhängigen ersten Messgröße und einen zweiten Sensor zur Erfassung einer zweiten, von der ersten Messgröße verschiedenen zweiten Messgröße, wobei die Drehzahlerfassungseinheit einen ersten Signalausgang zur Ausgabe eines mit der ersten Messgröße korrespondierenden Drehsignals aufweist, und wobei die Drehzahlerfassungseinheit einen zweiten Signalausgang zur Ausgabe eines mit der zweiten Messgröße korrespondierenden Messsignals aufweist. Es kann sich bei dem ersten und dem zweiten Signalausgang um physikalisch getrennte Signalausgangskomponenten handeln. Es können aber auch dieselben Signalausgangskomponenten für die erste und zweite Messgröße verwendet werden, wobei die Signale beispielsweise durch eine entsprechende Modulation voneinander unterscheidbar sind. Als gemeinsame Signalausgangskomponenten kann beispielsweise die digitale DRIVE-CLiQ-Schnittstelle der Firma SIEMENS verwendet werden.

Die Drehzahlerfassungseinheit ist dadurch gekennzeichnet, dass der zweite Sensor einen Takteingang aufweist, mittels dessen eine Taktrate der Erfassung der zweiten Messgröße anpassbar ist. Zudem ist sie dadurch gekennzeichnet, dass sie eine Verarbeitungseinheit aufweist, die dazu ausgebildet ist, eine Taktrate der Erfassung der ersten Messgröße zu ermitteln und die Taktrate der Erfassung der zweiten Messgröße unter Berücksichtigung der ermittelten Taktrate der Erfassung der ersten Messgröße anzupassen. Die Verarbeitungseinheit ist in diesem Fall Teil der Drehzahlerfassungseinheit. Es ist auch möglich, die Erfassung der Taktrate der Erfassung der ersten Messgröße und die Anpassung der zweiten Taktrate durch eine separate Verarbeitungseinheit vorzunehmen, was im weiteren Verlauf beschrieben ist.

Die Drehzahlerfassungseinheit weist neben dem eigentlichen Drehzahlsensor (dem ersten Sensor) wenigstens einen weiteren Sensor auf, mittels dessen eine zusätzliche Messgröße erfasst werden kann. Dabei sind die erste und die zweite Messgröße voneinander verschieden. Die zweite Messgröße ist demnach keine Drehzahl des drehbaren Elementes, sondern eine weitere Messgröße, die mit dem drehbaren Element in Verbindung steht bzw. diesem zuzuordnen ist. Der zweite Sensor kann beispielsweise ein Temperatursensor, ein Schwingungssensor, ein Beschleunigungssensor, ein Mikrofon, ein Drucksensor, ein Kraftsensor, ein Drehmomentsensor, ein Verlagerungssensor, ein Magnetfeldsensor, ein Spannungssensor oder ein Stromsensor sein. Durch die Erfassung der Temperatur, von Schwingungen, Beschleunigungen oder weiteren Größen lassen sich Rückschlüsse auf einen Zustand des drehbaren Elementes ziehen, die vorteilhaft für die Zustandsüberwachung verwendet werden können.

Die Drehzahlerfassungseinheit weist auf besonders vorteilhafte Art und Weise einen zweiten Sensor auf, der einen Takteingang aufweist. Über diesen Takteingang kann eine Verarbeitungseinheit die Taktrate der Erfassung der zweiten (zusätzlichen ) Messgröße an die Taktrate der Erfassung der ersten Messgröße durch den ersten Sensor anpassen. Solche (zweiten) Sensoren mit einer durch externe Vorgaben anpassbaren Taktrate sind noch nicht lange bekannt und werden im Rahmen der vorliegenden Erfindung besonders vorteilhaft dafür verwendet, die Taktrate des zweiten Sensors anpassbar zu gestalten. Dies bringt den großen Vorteil mit sich, dass der zweite Sensor auf den ersten Sensor synchronisiert werden kann (und nicht umgekehrt).

Das Vorsehen eines solchen taktbaren zweiten Sensors an die Drehzahlerfassungseinheit erlaubt die Erfassung von zusätzlichen Daten wie Beschleunigungsdaten absolut synchron zur Drehzahl des drehbaren Elementes. Dadurch wird eine direkte Ordnungsanalysen-Auswertung zur Zustandsüberwachung ermöglicht. Bislang war hierfür ein kostenintensives Zusatzsystem erforderlich, wobei auch hiermit Einschränkungen verbunden waren, da eine direkte Kopplung der zusätzlichen Sensordaten zu der Drehzahl des drehbaren Elementes fehlte.

Der erste Sensor und/oder der zweite Sensor können über eine Busschnittstelle mit der Verarbeitungseinheit verbunden sein. Der besondere Vorteil dieser Ausgestaltungsform ist, dass Sensoren mit einem genormten Stecker auf einfache Weise in eine korrespondierende Busanschlussbuchse der Drehzahlerfassungseinheit eingesteckt werden können. Der Montageaufwand reduziert sich dadurch. Ein weiterer Vorteil ist, dass die von einem Sensor erfasste Messgröße zumeist als digitalisierter Messwert vorliegt, der an die Busschnittstelle der Drehzahlerfassungseinheit übertragen wird. Die Busschnittstelle kann z.B. eine genormte USB-Schnittstelle sein. Ein USB-Stecker sowie eine dazu korrespondierende Buchse weisen vorteilhaft kompakte Abmessungen auf. Alternativ kann eine sogenannte Firewire-Schnittstelle auf Basis eines IEEE 1394-Standards, eine CAN-Bus- oder eine I²C-Busschnittstelle verwendet werden.

Der Anschluss kann aber auch eine Klemm- oder Buchsenleiste sein, welche im oder an der Drehzahlerfassungseinheit angeordnet ist. In die Klemm- bzw. Buchsenleiste können die jeweiligen Leitungsenden der Sensoren eingeschoben oder eingesteckt und dann fixiert werden.

Bevorzugt ist die Verarbeitungseinheit ein Mikrocontroller, ein FPGA, ein ASIC, eine diskret aufgebaute Schaltung oder ein Mikroprozessor. Diese Bauteile sind flexibel auf die Bedürfnisse der Drehzahlerfassungseinheit anpassbar.

Besonders bevorzugt weist die Drehzahlerfassungseinheit ein Gehäuse auf, innerhalb dessen sowohl der erste Sensor als auch der zweite Sensor angeordnet sind. Das Gehäuse kann beispielsweise aus Aluminium oder Kunststoff gefertigt sein. Der zweite Sensor kann aber auch außerhalb des Gehäuses angeordnet sein.

Im Rahmen einer bevorzugten Weiterbildung der Erfindung ist die Verarbeitungseinheit dazu ausgebildet, das Ermitteln der Taktrate der Erfassung der ersten Messgröße am Beginn einer Zustandsüberwachung vorzunehmen und zu bestimmten Zeitpunkten während des Ablaufs der Zustandsüberwachung zu wiederholen. Dadurch kann die Verarbeitungseinheit mögliche Änderungen der Taktrate des ersten Sensors bei dessen Betrieb feststellen und die Taktrate des zweiten Sensors entsprechend nachführen. Hierdurch erhöht sich die Zuverlässigkeit der Zustandsüberwachung weiter.

Die Aufgabe wird zudem gelöst durch eine technische Einheit, vorzugsweise eine elektrische Maschine, insbesondere Elektromotor, oder ein Getriebe, welche ein sich drehendes Element und eine Drehzahlerfassungseinheit nach einem der vorangegangenen Ansprüche zur Erfassung der ersten Messgröße und der zweiten Messgröße aufweisen.

Zudem wird die Aufgabe gelöst durch ein System, umfassend:
- eine Drehzahlerfassungseinheit, insbesondere Drehgeber, mit einem ersten Sensor zur Erfassung einer von der Drehstellung eines drehbaren Elementes abhängigen ersten Messgröße und einem zweiten Sensor zur Erfassung einer zweiten, von der ersten Messgröße verschiedenen zweiten Messgröße,
   wobei die Drehzahlerfassungseinheit einen ersten Signalausgang zur Ausgabe eines mit der ersten Messgröße korrespondierenden Drehsignals aufweist,
   und wobei die Drehzahlerfassungseinheit einen zweiten Signalausgang zur Ausgabe eines mit der zweiten Messgröße korrespondierenden Messsignals aufweist,
   und wobei der zweite Sensor einen Takteingang aufweist, mittels dessen eine Taktrate der Erfassung der zweiten Messgröße anpassbar ist; oder alternativ eine technische Einheit wie zuvor beschrieben,
- und eine separate Auswerteeinheit, die mit der Drehzahlerfassungseinheit verbunden ist, und die dazu ausgebildet ist, eine Taktrate der Erfassung der ersten Messgröße zu ermitteln und die Taktrate der Erfassung der zweiten Messgröße unter Berücksichtigung der ermittelten Taktrate der Erfassung der ersten Messgröße anzupassen.

Das zuvor erläuterte System umfasst demnach eine Drehzahlerfassungseinheit und eine separate (also externe) Auswerteeinheit - oder eine technische Einheit und die separate Auswerteeinheit.

Die separate Auswerteeinheit ist getrennt von der Drehzahlerfassungseinheit ausgebildet. Sie kann beispielsweise in einer cloudbasierten Umgebung (mit Auswerteund Steuerfunktionalitäten) realisiert sein. Sie kann aber auch in einer Einheit realisiert sein, die für eine Vorgabe der Taktrate der Erfassung der ersten Messgröße ausgebildet ist. Dies vereinfacht die Erfassung der Taktrate der Erfassung der ersten Messgröße, da die Einheit diese Taktrate selbst vorgibt.

Außerdem wird die Aufgabe gelöst durch ein Verfahren zur Überwachung eines Zustandes eines sich drehenden Elements, insbesondere einer elektrischen Maschine, umfassend:
a) Durch einen ersten Sensor einer Drehzahlerfassungseinheit, Erfassung einer von der Drehstellung des drehbaren Elementes abhängigen ersten Messgröße und Ausgabe eines mit der ersten Messgröße korrespondierenden Drehsignals,
b) Ermitteln einer Taktrate der Erfassung der ersten Messgröße durch eine Verarbeitungseinheit der Drehzahlerfassungseinheit oder durch eine separate Auswerteeinheit,
c) Durch einen zweiten Sensor der Drehzahlerfassungseinheit, Erfassung einer zweiten, von der ersten Messgröße verschiedenen zweiten Messgröße und Ausgabe eines mit der zweiten Messgröße korrespondierenden Messsignals, wobei der zweite Sensor einen Takteingang aufweist, mittels dessen eine Taktrate der Erfassung der zweiten Messgröße anpassbar ist,
d) Anpassen der Taktrate der Erfassung der zweiten Messgröße unter Berücksichtigung der ermittelten Taktrate der Erfassung der ersten Messgröße durch die Verarbeitungseinheit oder die separate Auswerteeinheit,
e) Verwenden des Drehsignals und des an das Drehsignal angepasste Messsignals zur Zustandsüberwachung des sich drehenden Elementes.

Das Ermitteln der Taktrate der Erfassung der ersten Messgröße durch die Verarbeitungseinheit oder die separate Auswerteeinheit kann dabei am Beginn der Zustandsüberwachung erfolgen und zu bestimmten Zeitpunkten während des Ablaufs der Zustandsüberwachung wiederholt werden. Die Taktrate der Erfassung der ersten Messgröße kann dabei beispielsweise von einer Steuereinheit eines Umrichters für eine elektrische Maschine als technische Einheit vorgegeben werden.

Für den Fall, dass der zweite Sensor die Taktrate der Erfassung der ersten Messgröße als seine eigene Taktrate bei der Erfassung der zweiten Messgröße unterstützt, kann im Rahmen des Anpassens der Taktrate der Erfassung der zweiten Messgröße die Taktrate der Erfassung der ersten Messgröße als Taktrate für die Erfassung der zweiten Messgröße verwendet werden. Der zweite Sensor unterstützt in der Regel eine bestimmte Bandbreite in der Taktrate seiner Erfassung der zweiten Messgröße. Liegt die Taktrate der Erfassung der ersten Messgröße in diesem Band, so kann die Taktrate der Erfassung der ersten Messgröße einfach als Taktrate für die Erfassung der zweiten Messgröße verwendet werden. Die Messsignale des ersten Sensors und des zweiten Sensors können so besonders einfach synchronisiert werden und die Zuordnung der Daten der zweiten Messgröße zu den Daten der ersten Messgröße kann für die Zustandsüberwachung direkt erfolgen.

Für den Fall, dass der zweite Sensor ein Vielfaches der Taktrate der Erfassung der ersten Messgröße als seine eigene Taktrate bei der Erfassung der zweiten Messgröße unterstützt, kann im Rahmen des Anpassens der Taktrate der Erfassung der zweiten Messgröße das Vielfache der Taktrate der Erfassung der ersten Messgröße als Taktrate für die Erfassung der zweiten Messgröße verwendet wird. Wenn die erste Taktrate beispielsweise 100 Hz beträgt, die Bandbreite des zweiten Sensors aber von 150 Hz bis 250 Hz reicht, kann als Taktrate des zweiten Sensors 200 Hz verwendet werden, was dem Doppelten der Taktrate des ersten Sensors entspricht.

Für die Zustandsüberwachung kann nur ein bestimmter Teil des Drehsignals und/oder des Messsignals betrachtet werden. Im zuvor beschriebenen Beispiel mit einer ersten Taktrate von 100 Hz und einer zweiten Taktrate von 200 Hz können die Daten des Messsignals auf die Daten des Drehsignals dezimiert werden. Dies bedeutet konkret, dass nur jedes zweite Sensordatum des zweiten Sensors ausgewertet wird.

Vorteilhafterweise können das Drehsignal und/oder das Messsignal einer frequenzabhängigen Filterung unterzogen werden, um ein Aliasing zu verhindern. Im vorherigen Beispiel wäre dies bei dem Messsignal der Fall, da dieses dezimiert wird, während das Drehsignal unbearbeitet verwendet wird.

Für die Zustandsüberwachung kann aber auch eine Interpolation von Daten des Drehsignals und/oder des Messsignals vorgenommen werden. Im zuvor beschriebenen Beispiel mit einer ersten Taktrate von 100 Hz und einer zweiten Taktrate von 200 Hz können die Daten des Drehsignals interpoliert werden, so dass zu den Zeitpunkten der Daten des Messsignals auch Daten des Drehsignals für die Zustandsüberwachung vorliegen. Damit würden alle Daten des Messsignals und alle Daten des Drehsignals sowie zusätzliche, interpolierte Daten des Drehsignals ausgewertet werden.

Das Vielfache muss nicht ganzzahlig sein. Es ist beispielsweise auch möglich, ein Verhältnis zwischen den beiden Taktraten von 4/3 oder 7/5 zu wählen. Für die Zustandsüberwachung können Daten sowohl des Drehsignals als auch des Messsignals so interpoliert werden, dass beide Signale eine Taktrate des kleinsten gemeinsamen Vielfachen der Taktrate der Erfassung der ersten Messgröße bzw. der Taktrate der Erfassung der zweiten Messgröße aufweisen. Bei einem Verhältnis von 4/3 zwischen Drehsignal-Taktrate und Messsignal-Taktrate müsste man beispielhaft drei Daten zwischen den erfassten Daten des Messsignals und zwei Daten zwischen den erfassten Daten des Drehsignals interpolieren. Für ein besseres Verständnis sei hier auf die Beschreibung der Ausführungsbeispiele und die Figuren verwiesen.

Für den Fall, dass der zweite Sensor einen Bruchteil der Taktrate der Erfassung der ersten Messgröße als seine eigene Taktrate bei der Erfassung der zweiten Messgröße unterstützt, kann im Rahmen des Anpassens der Taktrate der Erfassung der zweiten Messgröße der Bruchteil der Taktrate der Erfassung der ersten Messgröße als Taktrate für die Erfassung der zweiten Messgröße verwendet werden. Wenn die erste Taktrate beispielsweise 100 Hz beträgt, die Bandbreite des zweiten Sensors aber von 25 Hz bis 75 Hz reicht, kann als Taktrate des zweiten Sensors 50 Hz verwendet werden, was der Hälfte der Taktrate des ersten Sensors entspricht. Analog zu den vorherigen Ausführungen können für die Zustandsüberwachung entweder Daten des Messsignals interpoliert oder Daten des Drehsignals dezimiert werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine erfindungsgemäßes Drehsignalerfassungseinheit in einer schematischen Darstellung;
- FIG 2: eine zeitliche Gegenüberstellung von Drehsignal und Messsignal gemäß einem ersten Aspekt;
- FIG 3: eine zeitliche Gegenüberstellung von Drehsignal und Messsignal gemäß einem zweiten Aspekt;
- FIG 4: eine zeitliche Gegenüberstellung von Drehsignal und Messsignal gemäß einem dritten Aspekt;
- FIG 5: eine zeitliche Gegenüberstellung von Drehsignal und Messsignal gemäß einem vierten Aspekt;
- FIG 6: eine zeitliche Gegenüberstellung von Drehsignal und Messsignal gemäß einem fünften Aspekt; und
- FIG 7: eine zeitliche Gegenüberstellung von Drehsignal und Messsignal gemäß einem sechsten Aspekt.

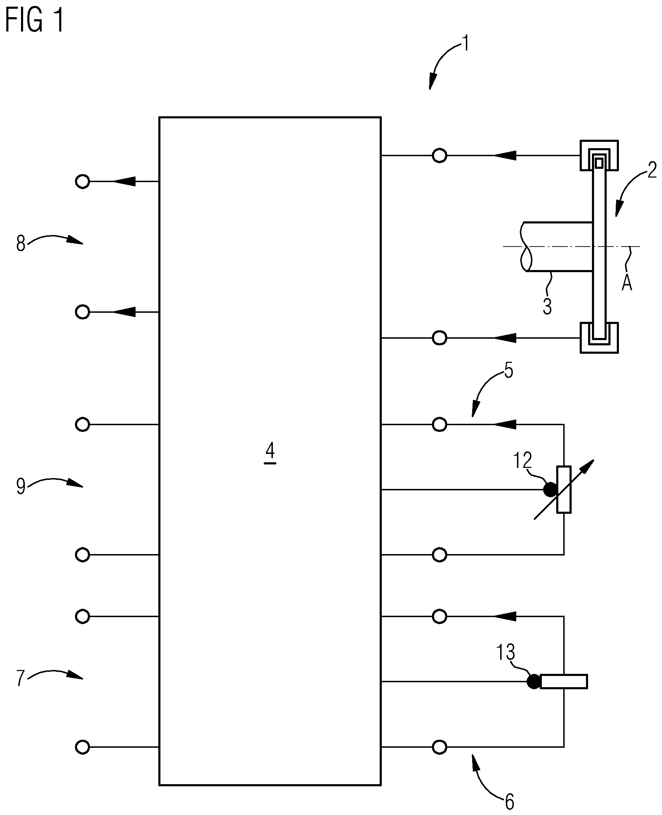

FIG 1 zeigt schematisch den Aufbau einer erfindungsgemäßen Drehzahlerfassungseinheit, die als Drehgeber 1 ausgebildet ist. Der Drehgeber 1 weist einen Drehsensor als ersten Sensor 2 zur Erfassung einer von der Drehstellung eines drehbaren Elementes 3 abhängigen Messgröße auf. Die Messgröße kann z.B. ein Winkel in Gradeinheiten sein. Mit dem Bezugszeichen A ist die Drehachse des Drehgebers 1 bzw. des drehbaren Elementes 3 bezeichnet. Das drehbare Element 3 ist aus Gründen der Übersichtlichkeit nicht dargestellt. Es kann sich bei diesem Objekt z.B. um eine Motorwelle, um einen Drehteller oder dergleichen handeln.

Der Drehgeber 1 weist zudem eine Verarbeitungseinheit 4, einen ersten Anschluss 5 für einen ersten weiteren Sensor und einen zweiten Anschluss 6 für einen zweiten weiteren Sensor auf. Außerdem weist der Drehgeber 1 einen Spannungseingang 7, einen Signalausgang 8 für den ersten Sensor 2 und zwei Signalausgänge 9 für die weiteren Sensoren 5, 6 auf. Die Verarbeitungseinheit 4 dient der schaltungstechnischen Verteilung der Spannungsversorgung 7, der eingangsseitigen Signale des ersten Sensors 2 sowie der weiteren Sensoren 5, 6 auf die ausgangsseitige Signalausgänge 8, 9. Die Verarbeitungseinheit 4 weist einen Mikrocontroller auf.

Aus einem modulierten Signal eines von zwei Phototransistoren (nicht dargestellt) des ersten Sensors 2 kann ein drehstellungs- und richtungsabhängiges Drehsignal erzeugt werden, welches an dem Sensorausgang 8 bereitgestellt wird. Entsprechend werden von den weiteren Sensoren 5, 6 Messsignale an den weiteren Signalausgängen 9 bereitgestellt. Der erste weitere Sensor 5 stellt einen Temperatursensor mit einer Temperatur als Messgröße dar, während der zweite weitere Sensor 6 ein Beschleunigungssensor mit einer Beschleunigung als Messgröße ist. Die weiteren Sensoren 5, 6 sind vorzugsweise an überwachungsbedürftigen Stellen in einer elektrischen Maschine angebracht, wie z.B. im Wickelkopf oder im Bereich der Motorlager. Beiden Sensoren 5, 6 weisen einen externen Takteingang 12, 13 auf, über den die Verarbeitungseinheit 4 eine Taktrate der Erfassung der jeweiligen Messgröße der beiden Sensoren 5, 6 variabel einstellen und ändern kann.

Es ist offensichtlich, dass auch nur ein einziger weiterer Sensor 5 an die Verarbeitungseinheit 4 angeschlossen werden kann.

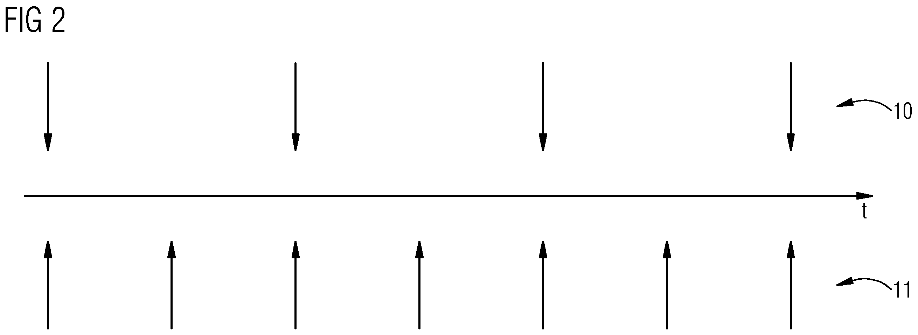

In FIG 2 ist ein zeitlicher Verlauf des an dem ersten Signalausgang 8 abgegriffenen Drehsignals 10 (in der Figur oben) sowie des an dem zweiten Signalausgang 9 abgegriffenen Messsignals 11 (Beschleunigung oder Temperatur, in der Figur unten) dargestellt. Die Verarbeitungseinheit 4 hat die Taktrate der Erfassung der ersten Messgröße ermittelt und die Taktrate des zweiten Sensors 5 (oder des dritten Sensors 6) entsprechend angepasst. Die Taktrate des weiteren Sensors 5, 6 konnte auf das Doppelte der Taktrate des ersten Sensors 2 eingestellt werden.

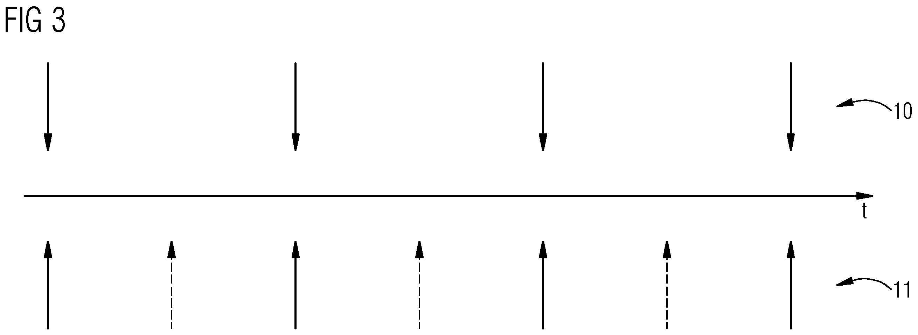

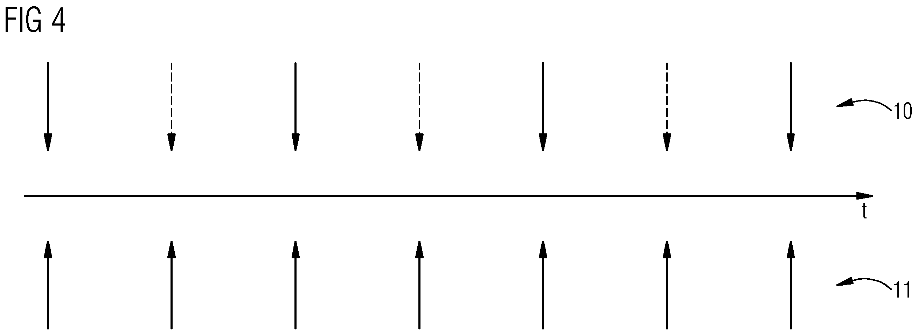

Für die Zustandsüberwachung muss jedes Datum des Messsignals 11 genau einem Datum des Drehsignals 10 zuordenbar sein. Deshalb kann entweder jedes zweite Datum des Messsignal 11 dezimiert und damit nicht berücksichtigt (in FIG 3 durch gepunktete Pfeile dargestellt), oder jedes zweite Datum des Drehsignals 10 interpoliert (in FIG 4 durch gestrichelte Pfeile dargestellt) werden.

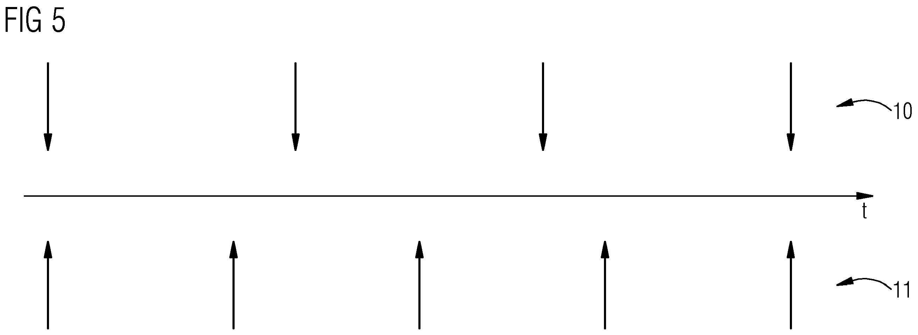

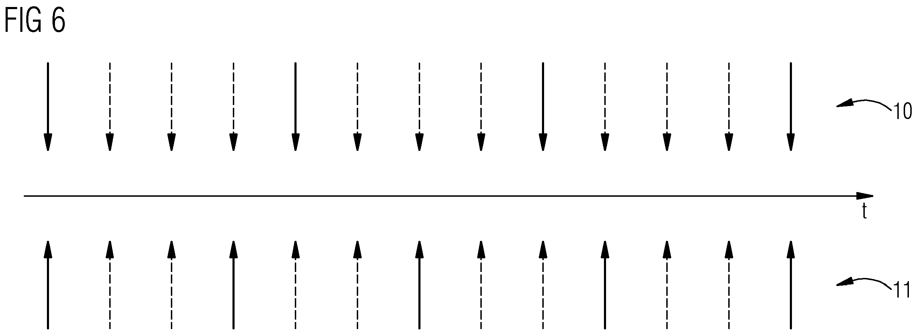

In FIG 5 ist ein weiterer zeitlicher Verlauf des an dem ersten Signalausgang 8 abgegriffenen Drehsignals 10 (in der Figur oben) sowie des an dem zweiten Signalausgang 9 abgegriffenen Messsignals 11 (Beschleunigung oder Temperatur, in der Figur unten) dargestellt. Es ist zu erkennen, dass ein Verhältnis der Taktraten von Messsignal 11 und Drehsignal 10 4:3 beträgt. Die Daten von Messsignal 11 und Drehsignal 10 werden hier auf eine Datenrate interpoliert, die das kleinste gemeinsame Vielfache der beiden Datenraten darstellt. Das Messsignal 11 wird demnach auf die dreifache Taktrate, das Drehsignal 10 auf die vierfache Taktrate interpoliert, was in FIG 6 zu erkennen ist.

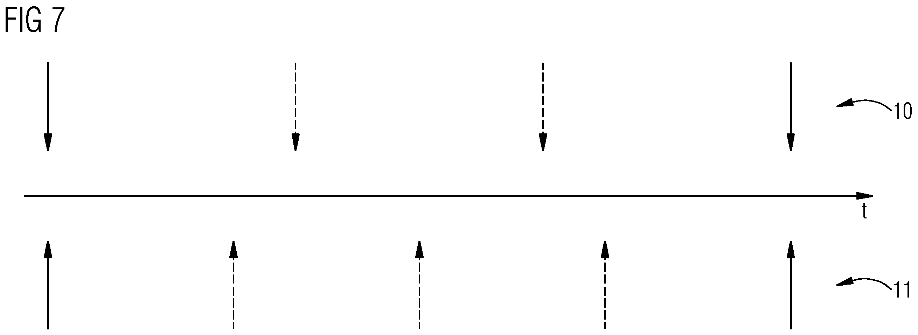

Alternativ kann, wie in FIG 7 dargestellt, auch ein Teil der Daten des Drehsignals 10 und des Messsignals 11 dezimiert werden. Es sind auch Mischformen aus Dezimierung und Interpolation möglich.

## Patentansprüche

1. Drehzahlerfassungseinheit (1), insbesondere Drehgeber, mit einem ersten Sensor (2) zur Erfassung einer von der Drehstellung eines drehbaren Elementes (3) abhängigen ersten Messgröße und einem zweiten Sensor (5) zur Erfassung einer zweiten, von der ersten Messgröße verschiedenen zweiten Messgröße,
wobei die Drehzahlerfassungseinheit (1) einen ersten Signalausgang (8) zur Ausgabe eines mit der ersten Messgröße korrespondierenden Drehsignals (10) aufweist,
und wobei die Drehzahlerfassungseinheit (1) einen zweiten Signalausgang (9) zur Ausgabe eines mit der zweiten Messgröße korrespondierenden Messsignals (11) aufweist,
**dadurch gekennzeichnet, dass**
der zweite Sensor (5) einen Takteingang (12, 13) aufweist, mittels dessen eine Taktrate der Erfassung der zweiten Messgröße anpassbar ist,
und dass die Drehzahlerfassungseinheit (1) eine Verarbeitungseinheit (4) aufweist, die dazu ausgebildet ist, eine Taktrate der Erfassung der ersten Messgröße zu ermitteln und die Taktrate der Erfassung der zweiten Messgröße unter Berücksichtigung der ermittelten Taktrate der Erfassung der ersten Messgröße anzupassen.

2. Drehzahlerfassungseinheit (1) nach Anspruch 1, bei der der erste Sensor und/oder der zweite Sensor (5, 6) über eine Busschnittstelle mit der Verarbeitungseinheit (4) verbunden sind.

3. Drehzahlerfassungseinheit (1) nach einem der vorangegangenen Ansprüche, bei der die Verarbeitungseinheit (4) ein Mikrocontroller, ein FPGA, ein ASIC, eine diskret aufgebaute Schaltung oder ein Mikroprozessor ist.

4. Drehzahlerfassungseinheit (1) nach einem der vorangegangenen Ansprüche, bei der der zweite Sensor (5, 6) als ein Temperatursensor, ein Schwingungssensor, ein Beschleunigungssensor, ein Mikrofon, ein Drucksensor, ein Kraftsensor, ein Drehmomentsensor, ein Verlagerungssensor, ein Magnetfeldsensor, ein Spannungssensor oder ein Stromsensor ausgebildet ist.

5. Drehzahlerfassungseinheit (1) nach einem der vorangegangenen Ansprüche, die ein Gehäuse aufweist, innerhalb dessen sowohl der erste Sensor (2) als auch der zweite Sensor (5, 6) angeordnet sind.

6. Drehzahlerfassungseinheit (1) nach einem der vorangegangenen Ansprüche, bei der die Verarbeitungseinheit (4) dazu ausgebildet ist, das Ermitteln der Taktrate der Erfassung der ersten Messgröße am Beginn einer Zustandsüberwachung vorzunehmen und zu bestimmten Zeitpunkten während des Ablaufs der Zustandsüberwachung zu wiederholen.

7. Technische Einheit, vorzugsweise eine elektrische Maschine, insbesondere Elektromotor, oder ein Getriebe, welche ein sich drehendes Element (3) und eine Drehzahlerfassungseinheit (1) nach einem der vorangegangenen Ansprüche zur Erfassung der ersten Messgröße und der zweiten Messgröße aufweisen.

8. System, umfassend
- eine Drehzahlerfassungseinheit (1), insbesondere Drehgeber, mit einem ersten Sensor (2) zur Erfassung einer von der Drehstellung eines drehbaren Elementes (3) abhängigen ersten Messgröße und einem zweiten Sensor (5) zur Erfassung einer zweiten, von der ersten Messgröße verschiedenen zweiten Messgröße,
wobei die Drehzahlerfassungseinheit (1) einen ersten Signalausgang (8) zur Ausgabe eines mit der ersten Messgröße korrespondierenden Drehsignals (10) aufweist,
und wobei die Drehzahlerfassungseinheit (1) einen zweiten Signalausgang (9) zur Ausgabe eines mit der zweiten Messgröße korrespondierenden Messsignals (11) aufweist,
und wobei der zweite Sensor (5) einen Takteingang (12, 13) aufweist, mittels dessen eine Taktrate der Erfassung der zweiten Messgröße anpassbar ist,
- und eine separate Auswerteeinheit, die mit der Drehzahlerfassungseinheit verbunden ist, und die dazu ausgebildet ist, eine Taktrate der Erfassung der ersten Messgröße zu ermitteln und die Taktrate der Erfassung der zweiten Messgröße unter Berücksichtigung der ermittelten Taktrate der Erfassung der ersten Messgröße anzupassen.

9. System nach Anspruch 8, bei dem die Auswerteeinheit in einer cloudbasierten Umgebung realisiert ist.

10. System nach Anspruch 8, bei dem die Auswerteeinheit i einer Einheit realisiert ist, die für eine Vorgabe der Taktrate der Erfassung der ersten Messgröße ausgebildet ist.

11. Verfahren zur Überwachung eines Zustandes eines sich drehenden Elements (3), insbesondere einer elektrischen Maschine, umfassend:
a) Durch einen ersten Sensor (2) einer Drehzahlerfassungseinheit (1), Erfassung einer von der Drehstellung des drehbaren Elementes (3) abhängigen ersten Messgröße und Ausgabe eines mit der ersten Messgröße korrespondierenden Drehsignals (10),
b) Ermitteln einer Taktrate der Erfassung der ersten Messgröße durch eine Verarbeitungseinheit der Drehzahlerfassungseinheit (1) oder durch eine separate Auswerteeinheit,
c) Durch einen zweiten Sensor (5, 6) der Drehzahlerfassungseinheit (1), Erfassung einer zweiten, von der ersten Messgröße verschiedenen zweiten Messgröße und Ausgabe eines mit der zweiten Messgröße korrespondierenden Messsignals (11), wobei der zweite Sensor (5, 6) einen Takteingang (12, 13) aufweist, mittels dessen eine Taktrate der Erfassung der zweiten Messgröße anpassbar ist,
d) Anpassen der Taktrate der Erfassung der zweiten Messgröße unter Berücksichtigung der ermittelten Taktrate der Erfassung der ersten Messgröße durch die Verarbeitungseinheit (4) oder durch die separate Auswerteeinheit,
e) Verwenden des Drehsignals (10) und des an das Drehsignal (10) angepassten Messsignals (11) zur Zustandsüberwachung des sich drehenden Elementes (3).

12. Verfahren nach Anspruch 11, bei dem das Ermitteln der Taktrate der Erfassung der ersten Messgröße am Beginn der Zustandsüberwachung erfolgt und zu bestimmten Zeitpunkten während des Ablaufs der Zustandsüberwachung wiederholt wird.

13. Verfahren nach Anspruch 11 oder 12, bei dem für den Fall, dass der zweite Sensor (5, 6) die Taktrate der Erfassung der ersten Messgröße als seine eigene Taktrate bei der Erfassung der zweiten Messgröße unterstützt, im Rahmen des Anpassens der Taktrate der Erfassung der zweiten Messgröße die Taktrate der Erfassung der ersten Messgröße als Taktrate für die Erfassung der zweiten Messgröße verwendet wird.

14. Verfahren nach Anspruch 11 oder 12, bei dem für den Fall, dass der zweite Sensor (5, 6) ein Vielfaches der Taktrate der Erfassung der ersten Messgröße als seine eigene Taktrate bei der Erfassung der zweiten Messgröße unterstützt, im Rahmen des Anpassens der Taktrate der Erfassung der zweiten Messgröße das Vielfache der Taktrate der Erfassung der ersten Messgröße als Taktrate für die Erfassung der zweiten Messgröße verwendet wird.

15. Verfahren nach Anspruch 11 oder 12, bei dem für den Fall, dass der zweite Sensor (5, 6) einen Bruchteil der Taktrate der Erfassung der ersten Messgröße als seine eigene Taktrate bei der Erfassung der zweiten Messgröße unterstützt, im Rahmen des Anpassens der Taktrate der Erfassung der zweiten Messgröße der Bruchteil der Taktrate der Erfassung der ersten Messgröße als Taktrate für die Erfassung der zweiten Messgröße verwendet wird.

16. Verfahren nach einem der Ansprüche 11 bis 15, bei dem das Drehsignal (10) und/oder das Messsignal (11) einer frequenzabhängigen Filterung unterzogen werden, um ein Aliasing zu verhindern.

17. Verfahren nach einem der Ansprüche 11 bis 16, bei dem für die Zustandsüberwachung nur ein bestimmter Teil des Drehsignals (10) und/oder des Messsignals (11) betrachtet wird.

18. Verfahren nach einem der Ansprüche 11 bis 17, bei dem für die Zustandsüberwachung eine Interpolation von Daten des Drehsignals (10) und/oder des Messsignals (11) vorgenommen wird.

## Claims

1. Rotational speed acquisition unit (1), in particular rotary encoder, with a first sensor (2) for acquiring a first measured variable dependent on the rotational position of a rotatable element (3) and a second sensor (5) for acquiring a second measured variable different from the first measured variable,
wherein the rotational speed acquisition unit (1) has a first signal output (8) for outputting a rotation signal (10) corresponding with the first measured variable,
and wherein the rotational speed acquisition unit (1) has a second signal output (9) for outputting a measuring signal (11) corresponding with the second measured variable,
**characterised in that**
the second sensor (5) has a clock input (12, 13) by means of which a clock rate of the acquisition of the second measured variable can be adjusted,
and that the rotational speed acquisition unit (1) has a processing unit (4) which is embodied to ascertain a clock rate of the acquisition of the first measured variable and to adjust the clock rate of the acquisition of the second measured variable by taking into account the ascertained clock rate of the acquisition of the first measured variable.

2. Rotational speed acquisition unit (1) according to claim 1, in which the first sensor and/or the second sensor (5, 6) are connected to the processing unit (4) via a bus interface.

3. Rotational speed acquisition unit (1) according to one of the preceding claims, in which the processing unit (4) is a microcontroller, an FPGA, an ASIC, a discretely constructed circuit or a microprocessor.

4. Rotational speed acquisition unit (1) according to one of the preceding claims, in which the second sensor (5, 6) is embodied as a temperature sensor, a vibration sensor, an acceleration sensor, a microphone, a pressure sensor, a force sensor, a torque sensor, a displacement sensor, a magnetic field sensor, a voltage sensor or a current sensor.

5. Rotational speed acquisition unit (1) according to one of the preceding claims, which has a housing, inside which both the first sensor (2) and the second sensor (5, 6) are arranged.

6. Rotational speed acquisition unit (1) according to one of the preceding claims, in which the processing unit (4) is embodied to carry out the ascertainment of the clock rate of the acquisition of the first measured variable at the beginning of condition monitoring and to repeat it at particular instants during the course of the condition monitoring.

7. Technical unit, preferably an electric machine, in particular electric motor, or a transmission, which have a rotating element (3) and a rotational speed acquisition unit (1) according to one of the preceding claims for acquiring the first measured variable and the second measured variable.

8. System, comprising
- a rotational speed acquisition unit (1), in particular rotary encoder, with a first sensor (2) for acquiring a first measured variable dependent on the rotational position of a rotatable element (3) and a second sensor (5) for acquiring a second measured variable different from the first measured variable,
wherein the rotational speed acquisition unit (1) has a first signal output (8) for outputting a rotation signal (10) corresponding with the first measured variable,
and wherein the rotational speed acquisition unit (1) has a second signal output (9) for outputting a measuring signal (11) corresponding with the second measured variable, and wherein the second sensor (5) has a clock input (12, 13) by means of which a clock rate of the acquisition of the second measured variable can be adjusted,
- and a separate evaluation unit which is connected to the rotational speed acquisition unit and which is embodied to ascertain a clock rate of the acquisition of the first measured variable and to adjust the clock rate of the acquisition of the second measured variable by taking into account the ascertained clock rate of the acquisition of the first measured variable.

9. System according to claim 8, in which the evaluation unit is implemented in a cloud-based environment.

10. System according to claim 8, in which the evaluation unit is implemented in a unit which is embodied for a specification of the clock rate of the acquisition of the first measured variable.

11. Method for monitoring a condition of a rotating element (3), in particular an electric machine, comprising:
a) by way of a first sensor (2) of a rotational speed acquisition unit (1), acquiring a first measured variable dependent on the rotational position of the rotatable element (3) and outputting a rotation signal (10) corresponding with the first measured variable,
b) ascertaining a clock rate of the acquisition of the first measured variable by way of a processing unit of the rotational speed acquisition unit (1) or by way of a separate evaluation unit,
c) by way of a second sensor (5, 6) of the rotational speed acquisition unit (1), acquiring a second measured variable different from the first measured variable and outputting a measuring signal (11) corresponding with the second measured variable, wherein the second sensor (5, 6) has a clock input (12, 13) by means of which a clock rate of the acquisition of the second measured variable can be adjusted,
d) adjusting the clock rate of the acquisition of the second measured variable by taking into account the ascertained clock rate of the acquisition of the first measured variable by way of the processing unit (4) or by way of the separate evaluation unit,
e) using the rotation signal (10) and the measuring signal (11) adjusted to the rotation signal (10) for monitoring the condition of the rotating element (3).

12. Method according to claim 11, in which the ascertaining of the clock rate of the acquisition of the first measured variable takes place at the beginning of the condition monitoring and is repeated at particular instants during the course of the condition monitoring.

13. Method according to claim 11 or 12, in which for the case where the second sensor (5, 6) supports the clock rate of the acquisition of the first measured variable as its own clock rate during acquisition of the second measured variable, the clock rate of the acquisition of the first measured variable is used as the clock rate for the acquisition of the second measured variable during the course of adjusting the clock rate of the acquisition of the second measured variable.

14. Method according to claim 11 or 12, in which for the case where the second sensor (5, 6) supports a multiple of the clock rate of the acquisition of the first measured variable as its own clock rate during acquisition of the second measured variable, the multiple of the clock rate of the acquisition of the first measured variable is used as the clock rate for the acquisition of the second measured variable during the course of adjusting the clock rate of the acquisition of the second measured variable.

15. Method according to claim 11 or 12, in which for the case where the second sensor (5, 6) supports a fraction of the clock rate of the acquisition of the first measured variable as its own clock rate during acquisition of the second measured variable, the fraction of the clock rate of the acquisition of the first measured variable is used as the clock rate for the acquisition of the second measured variable during the course of adjusting the clock rate of the acquisition of the second measured variable.

16. Method according to one of claims 11 to 15, in which the rotation signal (10) and/or the measuring signal (11) are subject to frequency-dependent filtering in order to prevent aliasing.

17. Method according to one of claims 11 to 16, in which only a particular part of the rotation signal (10) and/or of the measuring signal (11) is considered for the condition monitoring.

18. Method according to one of claims 11 to 17, in which an interpolation of data of the rotation signal (10) and/or of the measuring signal (11) is carried out for the condition monitoring.

## Revendications

1. Unité (1) de détection à tachymètre, en particulier codeur rotatif, comprenant un premier capteur (2) de détection d'une première grandeur de mesure dépendant de la position en rotation d'un élément (3) rotatif et un deuxième capteur (5) de détection d'une deuxième grandeur de mesure différente de la première grandeur de mesure,
dans laquelle l'unité (1) de détection à tachymètre a une première sortie (8) de signal pour la sortie d'un signal (10) de rotation correspondant à la première grandeur de mesure,
et dans laquelle l'unité (1) de détection à tachymètre a une deuxième sortie (9) de signal pour la sortie d'un signal (11) de mesure correspondant à la deuxième grandeur de mesure,
**caractérisée en ce que**
le deuxième capteur (5) a une entrée (12, 13) d'horloge, au moyen de laquelle une cadence de la détection de la deuxième grandeur de mesure peut être adaptée,
et **en ce que** l'unité (1) de détection à tachymètre a une unité (4) de traitement, qui est constituée pour déterminer une cadence de la détection de la première grandeur de mesure et pour adapter la cadence de la détection de la deuxième grandeur de mesure en tenant compte de la cadence déterminée de la détection de la première grandeur de mesure.

2. Unité (1) de détection à tachymètre suivant la revendication 1, dans laquelle le premier capteur et/ou le deuxième capteur (5, 6) sont reliés par une interface de bus à l'unité (4) de traitement.

3. Unité (1) de détection à tachymètre suivant l'une des revendications précédentes, dans laquelle l'unité (4) de traitement est une micro-unité de commande, un FPGA, un ASIC, un circuit de constitution discrète ou un microprocesseur.

4. Unité (1) de détection à tachymètre suivant l'une des revendications précédentes, dans laquelle le deuxième capteur (5, 6) est constitué en capteur de température, en capteur de vibration, en capteur d'accélération, en microphone, en capteur de pression, en capteur de force, en capteur de couple, en capteur de déplacement, en capteur de champ magnétique, en capteur de tension ou en capteur de courant.

5. Unité (1) de détection à tachymètre suivant l'une des revendications précédentes, qui a un boîtier à l'intérieur duquel sont disposés à la fois le premier capteur (2) et le deuxième capteur (5, 6).

6. Unité (1) de détection à tachymètre suivant l'une des revendications précédentes, dans laquelle l'unité (4) de traitement est constituée pour effectuer la détermination de la cadence de la détection de la première grandeur de mesure au début d'un contrôle d'état et pour la répéter à des instants déterminés pendant le déroulement du contrôle d'état.

7. Unité technique, de préférence une machine électrique, en particulier un moteur électrique ou une transmission, qui a un élément (3) rotatif et une unité (1) de détection à tachymètre suivant l'une des revendications précédentes pour la détection de la première grandeur de mesure et de la deuxième grandeur de mesure.

8. Système, comprenant
- une unité (1) de détection à tachymètre, en particulier un codeur rotatif, comprenant un premier capteur (2) de détection d'une première grandeur de mesure dépendant de la position en rotation d'un élément (3) rotatif et un deuxième capteur (5) de détection d'une deuxième grandeur de mesure différente de la première grandeur de mesure,
dans lequel l'unité (1) de détection à tachymètre a une première sortie (8) de signal pour la sortie d'un signal (10) de rotation correspondant à la première grandeur de mesure,
et dans lequel l'unité (1) de détection à tachymètre a une deuxième sortie (9) de signal pour la sortie d'un signal (11) de mesure correspondant à la deuxième grandeur de mesure,
et dans lequel le deuxième capteur (5) a une entrée (12, 13) d'horloge, au moyen de laquelle une cadence de la détection de la deuxième grandeur de mesure peut être adaptée,
- et une unité distincte d'évaluation, qui est reliée à l'unité de détection à tachymètre et qui est constituée pour déterminer une cadence de la détection de la première grandeur de mesure et pour adapter la cadence de la détection de la deuxième grandeur de mesure en tenant compte de la cadence déterminée de la détection de la première grandeur de mesure.

9. Système suivant la revendication 8, dans lequel l'unité d'évaluation est réalisée dans un environnement reposant sur le cloud.

10. Système suivant la revendication 8, dans lequel l'unité d'évaluation est réalisée dans une unité, qui est constituée pour une prescription de la cadence de la détection de la première grandeur de mesure.

11. Procédé de contrôle d'un état d'un élément (3) rotatif, en particulier d'une machine électrique, comprenant :
a) par un premier capteur (2) d'une unité (1) de détection à tachymètre, détection d'une première grandeur de mesure dépendant de la position en rotation de l'élément (3) rotatif et sortie d'un signal (10) de rotation correspondant à la première grandeur de mesure,
b) détermination d'une cadence de la détection de la première grandeur de mesure par une unité de traitement de l'unité (1) de détection à tachymètre ou par une unité d'évaluation distincte,
c) par un deuxième capteur (5, 6) de l'unité (1) de détection à tachymètre, détection d'une deuxième grandeur de mesure différente de la première grandeur de mesure et sortie d'un signal (11) de mesure correspondant à la deuxième grandeur de mesure, dans lequel le deuxième capteur (5, 6) a une entrée (12, 13) d'horloge, au moyen de laquelle une cadence de la détection de la deuxième grandeur de mesure peut être adaptée,
d) adaptation par l'unité (4) de traitement ou par l'unité d'évaluation distincte de la cadence de la détection de la deuxième grandeur de mesure en tenant compte de la cadence déterminée de la détection de la première grandeur de mesure,
e) utilisation du signal (10) de rotation et du signal (11) de mesure adapté au signal (10) de rotation pour le contrôle d'état de l'élément (3) rotatif.

12. Procédé suivant la revendication 11, dans lequel la détermination de la cadence de la détection de la première grandeur de mesure s'effectue au début du contrôle d'état et on la répète à des instants déterminés pendant le déroulement du contrôle d'état.

13. Procédé suivant la revendication 11 ou 12, dans lequel, dans le cas où le deuxième capteur (5, 6) soutient la cadence de la détection de la première grandeur de mesure comme sa propre cadence lors de la détection de la deuxième grandeur de mesure, dans le cadre de l'adaptation de la cadence de la détection de la deuxième grandeur de mesure, on utilise la cadence de la détection de la première grandeur de mesure comme cadence pour la détection de la deuxième grandeur de mesure.

14. Procédé suivant la revendication 11 ou 12, dans lequel, dans le cas où le deuxième capteur (5, 6) soutient un multiple de la cadence de la détection de la première grandeur de mesure comme sa propre cadence lors de la détection de la deuxième grandeur de mesure, dans le cadre de l'adaptation de la cadence de la détection de la deuxième grandeur de mesure, on utilise le multiple de la cadence de la détection de la première grandeur de mesure comme cadence pour la détection de la deuxième grandeur de mesure.

15. Procédé suivant la revendication 11 ou 12, dans lequel, dans le cas où le deuxième capteur (5, 6) soutient une fraction de la cadence de la détection de la première grandeur de mesure comme sa propre cadence lors de la détection de la deuxième grandeur de mesure, dans le cadre de l'adaptation de la cadence de la détection de la deuxième grandeur de mesure, on utilise la fraction de la cadence de la détection de la première grandeur de mesure comme cadence pour la détection de la deuxième grandeur de mesure.

16. Procédé suivant l'une des revendications 11 à 15, dans lequel on soumet le signal (10) de rotation et/ou le signal (11) de mesure à un filtrage, en fonction de la fréquence, pour empêcher un aliasing.

17. Procédé suivant l'une des revendications 11 à 16, dans lequel pour le contrôle d'état, on ne considère qu'une partie déterminée du signal (10) de rotation et/ou du signal (11) de mesure.

18. Procédé suivant l'une des revendications 11 à 17, dans lequel pour le contrôle d'état, on effectue une interpolation de données du signal (10) de rotation et/ou du signal (11) de mesure.
